(19) Europäisches Patentamt
European Patent Office
Office européen des brevets

(11) **EP 1 234 747 B1**

(12) **FASCICULE DE BREVET EUROPEEN**

(45) Date de publication et mention
de la délivrance du brevet:
**22.08.2007 Bulletin 2007/34**

(51) Int Cl.:
***B62D 6/00*** *(2006.01)* ***B62D 6/04*** *(2006.01)*

(21) Numéro de dépôt: **02290410.6**

(22) Date de dépôt: **20.02.2002**

(54) **Ensemble de direction assistée électrique pour véhicule et procédé de commande associé**

Elektrische Servolenkung für ein Fahrzeug und Regelverfahren dafür

Electric power steering for a vehicle and control method therefor

(84) Etats contractants désignés:
**AT BE CH CY DE DK ES FI FR GB GR IE IT LI LU MC NL PT SE TR**

(30) Priorité: **21.02.2001 FR 0102357**
**21.02.2001 FR 0102358**

(43) Date de publication de la demande:
**28.08.2002 Bulletin 2002/35**

(73) Titulaire: **Peugeot Citroen Automobiles SA**
**92200 Neuilly sur Seine (FR)**

(72) Inventeurs:
- **Bernede, Dominique Marc**
  **92190 Meudon (FR)**
- **Del Fabbro, Tonino**
  **78230 Le Pecq sur Seine (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 1 031 493**

**Description**

L'invention se rapporte à un ensemble de direction de véhicule automobile comportant un dispositif d'assistance électrique.

Elle concerne plus précisément un ensemble de direction assistée électrique de véhicule automobile conforme au préambule de la revendication 1 (voir EP-A-1031493).

Dans les systèmes de direction assistée électrique connus, un moteur électrique entraîne, par l'intermédiaire d'un réducteur, un pignon engrenant avec la crémaillère de direction ou l'arbre de direction, de façon à transmettre à la crémaillère un effort d'assistance. Le moteur électrique est commandé par un calculateur qui applique des lois de commande préprogrammées pour tenir compte de l'évolution de paramètres de fonctionnement du véhicule et de la direction, tels que la vitesse du véhicule, le couple appliqué sur le volant et l'arbre de direction par le conducteur, et la vitesse de rotation du volant.

Les lois de commande préprogrammées se présentent en général sous la forme de cartographies. Le calculateur délivre au moteur électrique, à partir de ces paramètres de fonctionnement et des lois de commande préprogrammées, un signal de commande de couple correspondant au couple moteur de sortie à délivrer pour exercer sur la crémaillère l'effort d'assistance désiré.

En général, il n'est pas prévu de boucle de régulation permettant de corriger le signal de commande émis vers le moteur en fonction de grandeurs mesurées, significatives d'un couple ou d'un effort d'assistance réellement délivré par le moteur.

Un dispositif d'assistance de ce type ne donne pas entière satisfaction, du fait que les paramètres auxquels sont appliquées les lois de commande ne permettent pas d'accéder de façon simple et précise à un effort d'assistance adapté aux sensations de l'utilisateur.

Par ailleurs, certains véhicules sont équipés de systèmes électroniques de contrôle de trajectoire. Certains de ces systèmes communément désignés par l'appellation « C.G.C. » pour « Contrôle Global de Châssis », ont pour fonction de maintenir le véhicule sur une trajectoire idéale lors d'un virage, par des actions sur l'accélération du véhicule et des actions de freinage individuelles sur chacune des roues. D'autres sont des systèmes électroniques de correction de trajectoire en situation d'urgence, parfois désignés sous l'appellation « E.S.P. » , dont la fonction est de ramener le véhicule sur une trajectoire plus intérieure lors d'une accélération en courbe par des actions de freinage individuelles sur chacune des roues avant.

Ces actions sont commandées en fonction d'une vitesse angulaire de lacet mesurée, et en fonction de la position de cette valeur mesurée par rapport à une courbe de valeurs théoriques. On sait qu'un freinage en courbe génère une résistance au braquage des roues sous la forme d'un surcouple sur le volant relativement important (qui peut être de l'ordre de 20% par rapport à des conditions de trajectoire et de vitesse similaires, en l'absence de freinage), et que les systèmes de direction assistée électrique connus ne permettent pas de compenser un tel surcouple.

Il en résulte que de telles directions assistées produisent, dans ces conditions de freinage en courbe, un couple d'assistance inadapté pour faire coïncider le couple-volant réellement exercé par le conducteur avec un couple désiré.

Dans le cas de la présence, sur le véhicule, d'un système de contrôle de trajectoire, il importe de résoudre cet inconvénient des systèmes de direction assistée électrique de l'état de la technique.

L'invention vise donc plus précisément un ensemble de direction assistée électrique équipant un véhicule qui comporte un système de contrôle de trajectoire, adapté pour commander le freinage sélectif d'une ou plusieurs roues au moyen de signaux individuels de freinage significatifs de paramètres de freinage.

Un but principal de l'invention est de remédier aux inconvénients précités et de proposer une direction assistée électrique capable de compenser les effets, sur les sensations de couple-volant perçues par le conducteur, d'un freinage en courbe dû à un système électronique de contrôle de trajectoire.

A cet effet, un ensemble de direction assistée suivant l'invention est conforme à la partie caractérisante de la revendication 1.

Suivant un premier mode de réalisation particulièrement adapté pour les véhicules équipés d'un système de Contrôle Global de Châssis, l'ensemble de direction assistée est conforme à la revendication 2.

Suivant un deuxième mode de réalisation particulièrement adapté pour les véhicules équipés d'un système de correction de trajectoire ou « E.S.P. », l'ensemble de direction assistée est conforme à la revendication 3.

Des modes de réalisation préférés de l'invention sont caractérisés par les revendications dépendantes 4 à 12.

L'invention vise également un procédé de commande, par un signal de commande de couple, du moteur électrique d'un ensemble de direction assistée électrique d'un véhicule automobile équipé d'un système de contrôle de trajectoire, ledit système de contrôle de trajectoire étant adapté pour commander le freinage sélectif d'une ou plusieurs roues au moyen de signaux individuels de freinage significatifs de paramètres de freinage, ledit ensemble comprenant un arbre de direction rotatif solidaire d'un volant et entraînant une crémaillère d'orientation des roues directrices du véhicule, un moteur électrique dont l'arbre de sortie engrène avec la crémaillère ou l'arbre de direction, et un dispositif de commande fournissant audit moteur électrique un signal de commande de couple adapté pour faire varier le couple de sortie du moteur électrique.

Selon le procédé de l'invention, on élabore le signal de commande de couple conformément à la partie caractérisante de la revendication 13.

Des caractéristiques optionnelles du procédé sont données dans les revendications dépendantes 14 à 28.

L'invention vise enfin un véhicule automobile comportant un ensemble de direction assistée tel que décrit précédemment ou fonctionnant suivant un procédé tel que décrit précédemment.

D'autres caractéristiques et avantages de l'invention ressortiront de la description suivante donnée à titre d'exemple sans caractère limitatif en regard des dessins annexés, sur lesquels :

- la Figure 1 est une vue schématique d'un ensemble de direction assistée suivant un premier mode de réalisation de l'invention ;
- la Figure 2 est un schéma représentant le dispositif de commande de l'ensemble de direction assistée de la Figure 1 ;
- la Figure 3 est une vue schématique d'un ensemble de direction assistée suivant un deuxième mode de réalisation de l'invention ; et
- la Figure 4 est un schéma représentant le dispositif de commande de l'ensemble de direction assistée de la Figure 3.

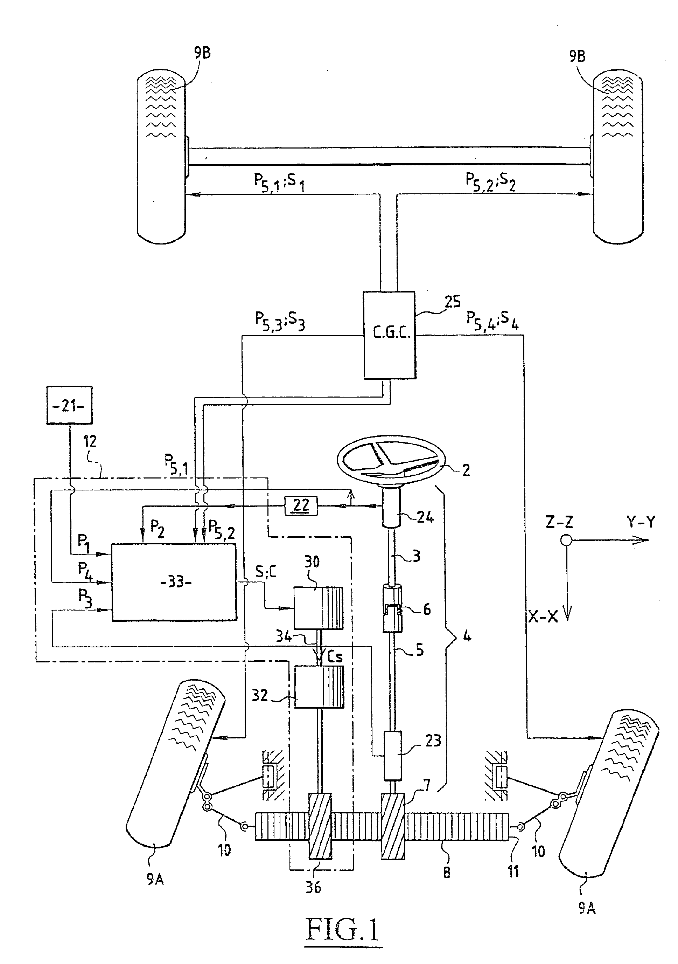

A la Figure 1, on a représenté un ensemble de direction 1 de véhicule automobile assistée électriquement, qui comporte un volant 2 solidaire d'un premier tronçon 3 d'un arbre de direction 4, relié à un deuxième tronçon 5 de cet arbre de direction 4, par l'intermédiaire d'une liaison à cardan 6. L'arbre de direction 4 est ici composé de deux tronçons 3, 5 articulés, mais pourrait être constitué d'une pièce. L'arbre de direction 4 transmet le couple appliqué sur le volant 2 par le conducteur du véhicule à un pignon de transmission 7, qui engrène avec une crémaillère de direction 8 disposée transversalement par rapport à l'axe du véhicule entre deux roues directrices 9A. Les roues directrices 9A sont constituées des roues avant, les deux roues arrière étant désignées par la référence 9B.

Le pignon de transmission 7 pourrait être remplacé par tout autre organe de transmission adapté, comme par exemple une vis sans fin. Chaque roue directrice 9A est susceptible de pivoter autour d'un axe de pivotement vertical Z-Z sous l'effet d'un déplacement linéaire de la crémaillère 8, ladite roue directrice 9A étant actionnée par un mécanisme d'orientation comportant une biellette 10 reliée à une extrémité 11 de la crémaillère 8.

Sur la Figure 1, on a représenté l'axe longitudinal X-X du véhicule, orienté dans le sens d'avancement, et son axe transversal Y-Y.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction de six paramètres $P_1$, $P_2$, $P_3$, $P_4$, $P_{5,1}$, $P_{5,2}$ de fonctionnement du véhicule et de fonctionnement de la direction.

Le premier paramètre $P_1$ est constitué par la valeur de vitesse du véhicule suivant l'axe longitudinal X-X, déterminée par un capteur de vitesse classique 21 présent usuellement sur les véhicules.

Le deuxième paramètre $P_2$ est constitué par la vitesse de rotation du volant 2, mesurée par un capteur de vitesse angulaire ou, comme représenté, par un capteur de position angulaire 24 associé à un dérivateur 22.

Le troisième paramètre $P_3$ représente le couple appliqué sur le volant 2, estimé au moyen d'un capteur de couple 23 monté sur le deuxième tronçon 5 de l'arbre de direction 4, dans une région proche du pignon de transmission 7.

Le quatrième paramètre $P_4$ est une valeur significative de la position angulaire du volant 2 par rapport à la position neutre de braquage nul, cette valeur étant fournie par le capteur 24.

Le véhicule est équipé par ailleurs d'un système électronique de contrôle global de châssis 25 (qui sera appelé par la suite C.G.C. pour plus de commodité). Ce système fonctionne suivant un principe connu consistant à agir en temps réel sur, d'une part, l'alimentation du moteur du véhicule, et d'autre part sur le freinage individuel des roues du véhicule, afin de corriger la trajectoire du véhicule en courbe. Pour cela, le système C.G.C. comporte essentiellement un module électronique, auquel il sera par la suite assimilé, ce module recevant à chaque instant les paramètres mesurés, tels que l'angle de braquage des roues directrices 9A et l'angle de braquage du volant 2, donné par le capteur de position angulaire 24. Le C.G.C. 25 détermine, pour ces conditions de virage mesurées, le profil théorique de vitesse de lacet que le véhicule doit suivre au cours de la progression du virage. Le paramètre de lacet du véhicule est également mesuré à chaque instant et fourni au CGC. Celui-ci compare le profil réel avec le profil théorique et délivre en conséquence des consignes correctrices adaptées pour modifier la commande d'accélération du véhicule (données par le conducteur au moyen de la pédale d'accélérateur), et au système de freinage du véhicule.

Seules les consignes correctrices de freinage sont prises en considération dans le dispositif qui fait l'objet de l'invention.

Le C.G.C. 25 calcule à chaque instant le couple de freinage à appliquer sur chacune des roues 9A, 9B du véhicule pour faire coïncider le profil réel de la vitesse de lacet du véhicule avec le profil théorique. Le C.G.C. 25 pilote un freinage individuel de chaque roue 9A, 9B du véhicule en délivrant un signal de freinage respectif $S_1$, $S_2$, $S_3$, $S_4$ significatif d'un paramètre de freinage correspondant $P_{5,1}$, $P_{5,2}$, $P_{5,3}$, $P_{5,4}$.

Les cinquième et sixième paramètres $P_{5,1}$, $P_{5,2}$ utilisés par le dispositif d'assistance 12 sont les paramètres de freinage, donnés par le C.G.C. 25, correspondant respectivement à la roue arrière droite et à la roue arrière gauche du véhicule.

On comprend que le CGC, qui fonctionne à chaque instant, ne délivre des signaux correctifs de freinage et d'accélération qu'à partir du moment où sont détectées des conditions de virage du véhicule.

Le dispositif d'assistance 12 comprend un moteur électrique 30 dont le couple de sortie $C_s$ est commandé par un dispositif électronique de commande 33, qui délivre au moteur 30 un signal de commande de couple S. Le couple de sortie $C_s$ du moteur électrique 30 est transmis à un réducteur 32 par l'intermédiaire de l'arbre de sortie 34 du moteur 30, et à un pignon d'assistance 36 engrenant avec la crémaillère 8. Naturellement, le pignon d'assistance 36 pourrait être prévu pour coopérer directement ou indirectement avec l'arbre de direction 4 de façon à produire une action d'assistance, non sur la crémaillère 8, mais en amont.

Chacun des capteurs 21, 22, 23, 24, ainsi que le C.G.C. 25 sont reliés au dispositif de commande 33, de façon à lui transmettre en temps réel les valeurs des paramètres respectifs P1, P2, P3, P4, $P_{5,1}$, $P_{5,2}$, mesurés à chaque instant $\underline{t}$.

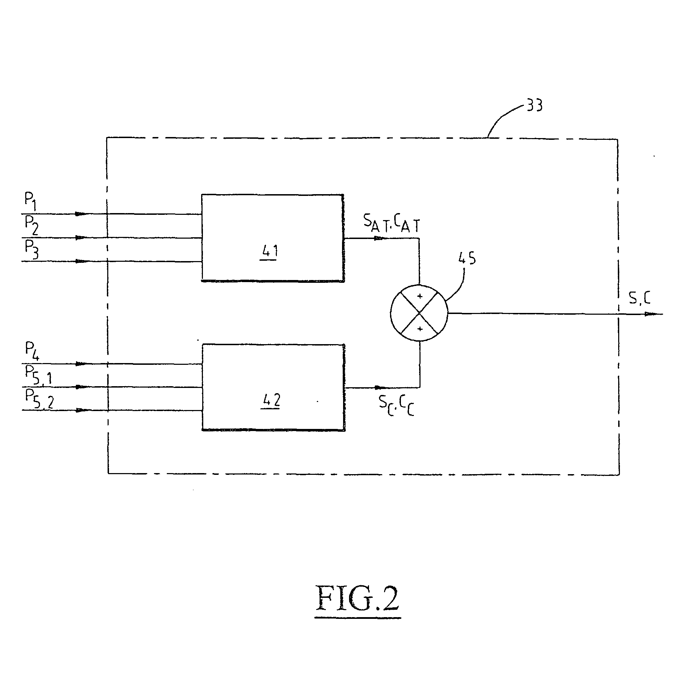

En référence maintenant à la Figure 2, on va décrire de façon plus précise le dispositif électronique de commande 33, qui reçoit en entrée les six paramètres P1, P2, P3, P4, $P_{5,1}$, $P_{5,2}$ sous la forme de signaux émis par les capteurs 21, 22, 23, 24, et le C.G.C. 25, et délivre en sortie le signal de commande de couple S.

Le dispositif électronique 33 comporte un premier organe de calcul 41 constitué d'une cartographie, et un deuxième organe de calcul 42 constituant un compensateur de CGC.

Le premier organe de calcul 41 est une cartographie de type connu et utilisé pour la commande de la direction assistée électrique de certains véhicules existants, qui détermine un couple d'assistance théorique $C_{AT}$ à partir d'un premier ensemble de paramètres parmi les paramètres $P_1$, $P_2$, $P_3$, $P_4$, $P_{5,1}$, $P_{5,2}$ précités. Ce premier ensemble de paramètres est constitué de la vitesse du véhicule $P_1$, $P_2$ et du couple volant mesuré $P_3$.

Le compensateur 42 émet alors un signal de compensation $S_C$ correspondant à un couple de compensation $C_C$ calculé à partir d'un deuxième ensemble de paramètres parmi les paramètres précités $P_1$, $P_2$, $P_3$, $P_4$, $P_{5,1}$, $P_{5,2}$. Ce deuxième ensemble de paramètres est constitué de la position angulaire $P_4$ du volant 2, du paramètre de freinage $P_{5,1}$ de la roue arrière droite 9B et du paramètre de freinage $P_{5,2}$ de la roue arrière gauche 9B.

Le couple de compensation $C_C$ représente un couple « injecté » pour compenser le surcouple résistant ressenti par le conducteur, dû au freinage supplémentaire des roues apporté par le C.G.C. 25.

Le dispositif électronique 53 comporte par ailleurs un sommateur 45 qui réalise la somme du signal d'assistance théorique $S_{AT}$ et du signal de compensation $S_c$ (ou de façon équivalente du couple d'assistance théorique $C_{AT}$ et du couple de compensation $C_{AT}$) pour obtenir le signal de commande de couple S (ou de façon équivalente le couple de commande C).

Le compensateur 42 utilise les paramètres $P_4$, $P_{5,1}$, $P_{5,2}$, qu'il reçoit en entrée, de la façon suivante :

Le paramètre de position angulaire $P_4$ du volant 2 est utilisé pour déterminer la direction de braquage du volant, c'est-à-dire virage à gauche ou virage à droite. Dans la suite du procédé de traitement des paramètres d'entrée du compensateur 42, on n'utilisera que le paramètre de freinage $P_{5,1}$, $P_{5,2}$ correspondant à la roue arrière extérieure au virage, à savoir le paramètre de freinage $P_{5,1}$ de la roue arrière droite s'il s'agit d'un virage à gauche, ou le paramètre de freinage $P_{5,2}$ de la roue arrière gauche s'il s'agit d'un virage à droite.

Le compensateur 42 compare ensuite la valeur absolue du paramètre de freinage ainsi déterminé $P_{5,1}$, $P_{5,2}$, à une valeur de seuil positive $S_F$ préenregistrée.

Si la valeur absolue ainsi calculée est inférieure à ladite valeur de seuil $S_F$, ce qui signifie que le freinage imposé par le C.G.C. à la roue arrière extérieure au virage est insuffisant pour justifier l'injection d'un couple de compensation, alors le couple de compensation $C_C$ calculé en sortie du compensateur 42 est nul.

Si cette valeur absolue est supérieure à la valeur de seuil $S_F$, ce qui correspond à des conditions de freinage suffisamment importantes pour générer un couple résistant sur l'arbre de direction sensible par le conducteur, alors le calcul du couple de compensation $C_c$ est calculé par les opérations suivantes :

- On applique au paramètre de freinage $P_{5,1}$, $P_{5,2}$ de la roue extérieure au virage une première fonction de transfert de la forme $F_1(p) = \dfrac{1}{Ap + B}$ , , dans laquelle A et B sont des constantes prédéterminées, la variable de fréquence p correspondant au paramètre de freinage $P_{5,1}$, $P_{5,2}$, lequel est une fonction du temps $\underline{t}$. Cette première fonction de transfert $F_1(p)$ se comporte comme un filtre passe-bas du premier ordre, dont les constantes sont choisies de manière à filtrer les fréquences supérieures à 15 Hz environ. Une première variable intermédiaire $V_1$, fonction

du temps, est ainsi obtenue.

- On applique à cette première variable intermédiaire $V_1$ une deuxième fonction de transfert

$$F_2(p) = \frac{\alpha.p}{\beta.p^2 + \gamma.p + \delta} \quad,$$

, dans laquelle $\alpha$, $\lambda$, $\beta$, $\delta$ sont des constantes prédéterminées, pour obtenir une

deuxième variable intermédiaire $V_2$, fonction du temps $\underline{t}$.

La deuxième fonction de transfert $F_2(p)$ est équivalente à un opérateur de dérivation.

- On applique ensuite à la deuxième variable intermédiaire $V_2$ ainsi obtenue, une fonction de retard, dont la constante de temps dépend de la valeur absolue de la première variable intermédiaire $V_1$, calculée au même instant t. On obtient ainsi une troisième variable intermédiaire $V_3$, fonction du temps $\underline{t}$.
- On applique ensuite à cette troisième variable intermédiaire $V_3$ un gain pouvant prendre deux valeurs différentes selon la valeur absolue de la première variable intermédiaire $V_1$, calculée au même instant t.
- On obtient ainsi une valeur de couple de compensation $C'_c$ qui est multipliée par une valeur de marche/arrêt 0 ou 1 qui dépend de l'état du compensateur 42, celui-ci pouvant être neutralisé sous diverses conditions, notamment des conditions de fonctionnement du C.G.C. 25 lui-même.

On obtient par le dispositif et le procédé qui viennent d'être décrits une compensation fiable, avec un temps de réaction optimal, du surcouple résistant produit sur l'arbre de direction par un freinage supplémentaire en courbe dû au CGC. Cette compensation présente l'avantage important de maintenir les sensations d'efforts du conducteur à un niveau désiré, non perturbé par le fonctionnement d'un dispositif de sécurité agissant sur le freinage du véhicule.

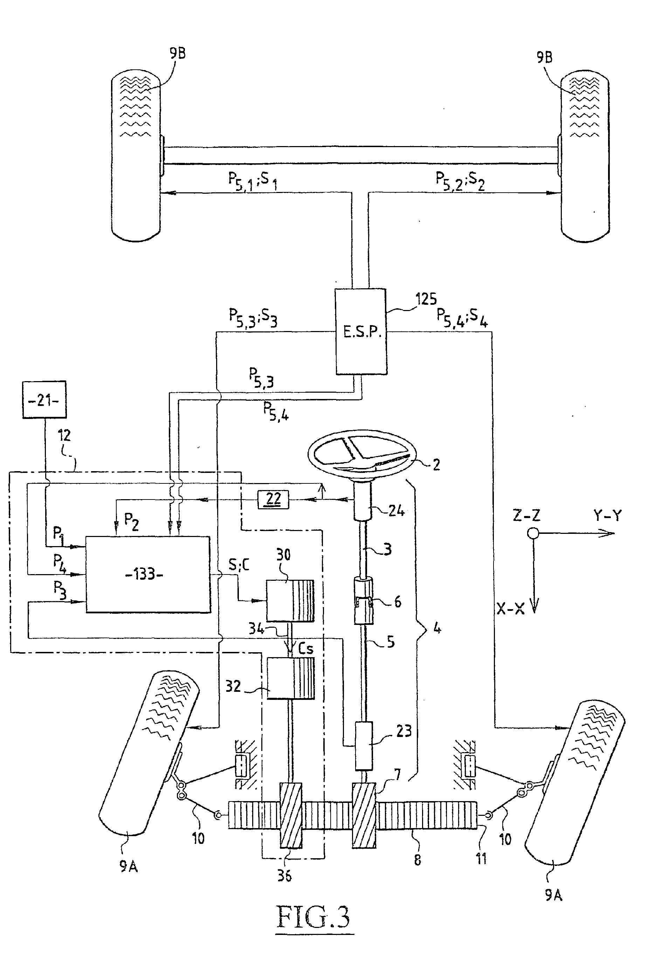

Le mode de réalisation illustré à la Figure 3 diffère de celui de la Figure 1 en ce que le véhicule est équipé d'un système électronique de correction de trajectoire 125 (qui sera appelé par la suite E.S.P. pour plus de commodité). Ce système fonctionne suivant un principe connu consistant à agir en temps réel sur le freinage individuel des roues du véhicule, afin de corriger la trajectoire du véhicule en phase d'accélération en courbe et en cas d'urgence, c'est-à-dire en cas de sous-virage excessif. Pour cela, le système E.S.P. comporte essentiellement un module électronique, auquel il sera par la suite assimilé, ce module recevant à chaque instant des paramètres mesurés, tels que l'angle de braquage des roues directrices 9A et/ou l'angle de braquage du volant 2, ce dernier étant donné par le capteur de position angulaire 24. L'E.S.P. 125 détermine, pour ces conditions de virage mesurées, le profil théorique de vitesse de lacet que le véhicule doit suivre au cours de la progression du virage. Le paramètre de lacet du véhicule est également mesuré à chaque instant et fourni à l'E.S.P. Celui-ci compare le profil réel avec le profil théorique et délivre en conséquence des consignes correctrices au système de freinage du véhicule.

L'E.S.P. 125 calcule à chaque instant le couple de freinage à appliquer sur chacune des roues 9A, 9B du véhicule, ou seulement certaines d'entre elles, pour faire coïncider le profil réel de la vitesse de lacet du véhicule avec le profil théorique. L'E.S.P. 125 pilote un freinage individuel de chacune de ces roues 9A, 9B du véhicule en délivrant un signal de freinage respectif $S_1$, $S_2$, $S_3$, $S_4$ significatif d'un paramètre de freinage correspondant $P_{5,1}$, $P_{5,2}$, $P_{5,3}$, $P_{5,4}$.

Les cinquième et sixième paramètres $P_{5,3}$, $P_{5,4}$ utilisés par le dispositif d'assistance 12 sont les paramètres de freinage, donnés par l'E.S.P. 125, correspondant respectivement à la roue avant droite et à la roue avant gauche du véhicule, à savoir les roues directrices 9A.

On comprend que l'E.S.P. ne fonctionne et ne délivre des signaux correctifs de freinage qu'à partir du moment où sont détectées des conditions de virage du véhicule. l'E.S.P. est désactivé ou « gelé », lorsque le conducteur agit lui-même sur les freins.

En pratique, lorsque le véhicule s'écarte de façon excessive de sa trajectoire théorique, l'E.S.P. provoque le freinage de la roue avant intérieure au virage.

Le dispositif d'assistance 12 comprend un moteur électrique 30 dont le couple de sortie $C_s$ est commandé par un dispositif électronique de commande 133, qui délivre au moteur 30 un signal de commande de couple S.

Chacun des capteurs 21, 22, 23, 24, ainsi que l'E.S.P. 125 sont reliés au dispositif de commande 133, de façon à lui transmettre en temps réel les valeurs des paramètres respectifs $P_1$, $P_2$, $P_3$, $P_4$, $P_{5,3}$, $P_{5,4}$, mesurés à chaque instant $\underline{t}$.

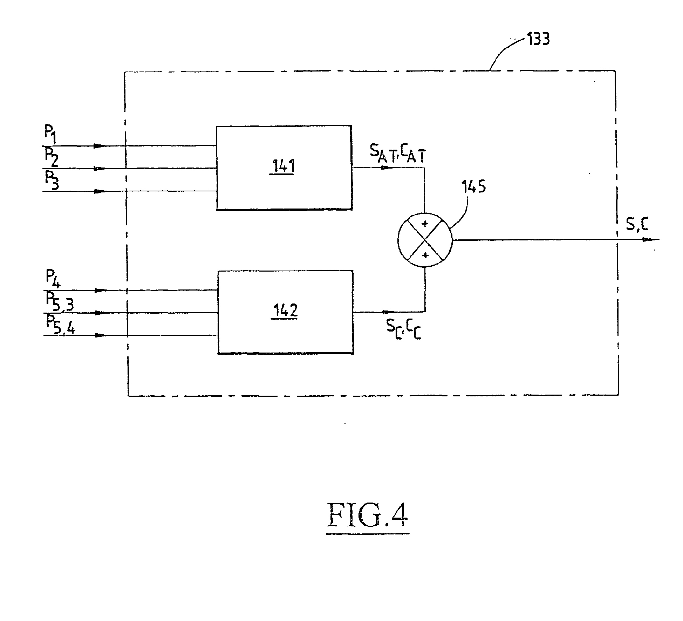

En référence maintenant à la Figure 4, on va décrire de façon plus précise le dispositif électronique de commande 133, qui reçoit en entrée les six paramètres P1, P2, P3, P4, $P_{5,3}$, $P_{5,4}$ sous la forme de signaux émis par les capteurs 21, 22, 23, 24, et l'E.S.P. 125, et délivre en sortie le signal de commande de couple S.

Le dispositif électronique 133 comporte un premier organe de calcul 141, constitué d'une cartographie, et un deuxième organe de calcul 142 constituant un compensateur de l'ESP.

Le premier organe de calcul 141 est une cartographie de type connu et utilisé pour la commande de la direction assistée électrique de certains véhicules existants, qui détermine un couple d'assistance théorique $C_{AT}$ à partir d'un premier ensemble de paramètres parmi les paramètres $P_1$, $P_2$, $P_3$, $P_4$, $P_{5,3}$, $P_{5,4}$ précités. Ce premier ensemble de paramètres est constitué de la vitesse du véhicule $P_1$, $P_2$ et du couple volant mesuré $P_3$.

Le compensateur 142 émet alors un signal de compensation $S_C$ correspondant à un couple de compensation $C_C$ calculé à partir d'un deuxième ensemble de paramètres parmi les paramètres précités $P_1$, $P_2$, $P_3$, $P_4$, $P_{5,3}$, $P_{5,4}$. Ce deuxième ensemble de paramètres est constitué de la position angulaire $P_4$ du volant 2, du paramètre de freinage $P_{5,3}$ de la roue avant droite 9B et du paramètre de freinage $P_{5,4}$ de la roue avant gauche 9B.

Le couple de compensation $C_C$ représente un couple «injecté » pour compenser le surcouple résistant ressenti par le conducteur, dû au freinage supplémentaire des roues apporté par l'E.S.P. 125.

Le dispositif électronique 133 comporte par ailleurs un sommateur 145 qui réalise la somme du signal d'assistance théorique $S_{AT}$ et du signal de compensation $S_c$ (ou de façon équivalente du couple d'assistance théorique $C_{AT}$ et du couple de compensation $C_{AT}$) pour obtenir le signal de commande de couple S (ou de façon équivalente le couple de commande C).

Le compensateur 142 utilise les paramètres $P_4$, $P_{5,3}$, $P_{5,4}$, qu'il reçoit en entrée, de la façon suivante :

Le paramètre de position angulaire $P_4$ du volant 2 est utilisé pour déterminer la direction de braquage du volant, c'est-à-dire virage à gauche ou virage à droite.

Le compensateur 142 compare chacun des paramètres de freinage $P_{5,3}$, $P_{5,4}$ à une valeur de seuil respective $S_{F3}$, $S_{F4}$, qui est de préférence une valeur de seuil commune $S_{F0} = S_{F3} = S_{F4}$, par exemple égale en valeur absolue à 100 N.m. Si le paramètre de freinage $P_{5,3}$, $P_{5,4}$ (correspondant dans cet exemple de réalisation au couple de freinage de roue) est, en valeur absolue, inférieur à cette valeur de seuil $S_{F0}$, on lui associe une valeur de test respective $T_3$, $T_4$ égale à 0. Dans le cas inverse, c'est-à-dire si le paramètre de freinage $P_{5,3}$, $P_{5,4}$ est en valeur absolue supérieur à la valeur de seuil $S_{F0}$, on lui attribue une valeur de test respective $T_3$, $T_4$ égale à 1.

Le compensateur 142 calcule par ailleurs la différence des paramètres de freinage $P_{5,3}$, $P_{5,4}$, en l'occurrence $P_{5,3} - P_{5,4}$.

Cette différence $P_{5,3} - P_{5,4}$ est multipliée par l'une des valeurs de test $T_3$, $T_4$ associée aux paramètres de freinage $P_{5,3}$, $P_{5,4}$, cette valeur de test étant sélectionnée en fonction du paramètre de position angulaire $P_4$ du volant. Plus précisément, si le paramètre de position angulaire $P_4$ est positif, on est dans les conditions d'un virage à gauche et la valeur de test sélectionnée est celle $T_4$ associée au paramètre de freinage $P_{5,4}$ de la roue avant gauche. Si au contraire, la valeur du paramètre de position angulaire $P_4$ est négative, ce qui correspond à un virage à droite, la valeur de test sélectionnée est celle $T_3$ associée au paramètre de freinage $P_{5,3}$ de la roue avant droite.

Le produit de la différence $P_{5,3} - P_{5,4}$ et de la valeur de test sélectionnée donne une première variable intermédiaire $W_1$, fonction du temps $\underline{t}$.

On applique à cette première variable intermédiaire en $W_1$ une première fonction de transfert de la forme

$$G_1(p) = \frac{1}{Mp+N}$$ dans laquelle M et N sont des constantes prédéterminées, respectivement une constante de temps et un gain fixe, la variable de fréquence p correspondant à la première variable intermédiaire $W_1$. Cette première fonction de transfert $G_1(p)$ se comporte comme un filtre passe-bas du premier ordre. On obtient de cette façon une deuxième variable intermédiaire $W_2$, fonction du temps.

On applique à cette deuxième variable intermédiaire $W_2$ un gain fixe qui est déterminé en fonction des caractéristiques géométriques et mécaniques des éléments de transmission. On obtient ainsi une troisième variable intermédiaire $W_3$, fonction du temps, qui permet d'accéder directement à la valeur de commande de couple, à savoir que la valeur de commande de couple $C_C$, à chaque instant, est égale soit à cette troisième variable intermédiaire $W_3$, soit à 0.

Pour cela, on calcule le produit de la troisième variable intermédiaire $W_3$ et d'une valeur de marche/arrêt du compensateur, égale à 0 ou à 1 suivant des conditions de fonctionnement du système de correction de trajectoire 125 ou du compensateur 142 lui-même. En particulier, l'E.S.P. 125 et le compensateur 142 peuvent être neutralisés, auquel cas la valeur de marche/arrêt est bloquée à 0, de même par conséquent que le couple de compensation $C_C$.

On obtient par le dispositif et le procédé qui viennent d'être décrits une compensation fiable, avec un temps de réaction optimal, du surcouple résistant produit sur l'arbre de direction par un freinage supplémentaire en courbe dû à l'ESP. Cette compensation présente l'avantage important de maintenir les sensations d'efforts du conducteur à un niveau désiré, non perturbé par le fonctionnement d'un dispositif de sécurité agissant sur le freinage du véhicule.

L'invention permet, grâce à l'adjonction d'un module électronique de compensation dans un ensemble à direction assistée de type déjà utilisé sur des véhicules existants, de gommer les effets négatifs d'un système de sécurité, tel qu'un système de correction de trajectoire du type C.G.C. ou E.S.P., sur les sensations de conduite de l'utilisateur.

**EP 1 234 747 B1**

**Revendications**

1. Ensemble de direction assistée électrique d'un véhicule automobile équipé d'un système de contrôle de trajectoire (25 ; 125), ledit système de contrôle de trajectoire étant adapté pour commander le freinage sélectif d'une ou plusieurs roues au moyen de signaux individuels de freinage ($S_1$, $S_2$, $S_3$, $S_4$) significatifs de paramètres de freinage ($P_{5,1}$, $P_{5,2}$, $P_{5,3}$, $P_{5,4}$), ledit ensemble comprenant un arbre de direction rotatif (4) solidaire d'un volant (2) et coopérant avec une crémaillère (8) d'orientation des roues directrices (9A) du véhicule, un moteur électrique (30) dont l'arbre de sortie (34) engrène avec la crémaillère (8) ou l'arbre de direction (4), et un dispositif de commande (33 ; 133) fournissant audit moteur électrique (30) un signal de commande (S) adapté pour faire varier le couple de sortie ($C_s$) du moteur électrique (30) en fonction de paramètres de fonctionnement ($P_1$, $P_2$, $P_3$, $P_4$, $P_{5,1}$, $P_{5,2}$) de l'arbre de direction (4) et plus généralement du véhicule, ledit dispositif de commande (33 ; 133) comportant un premier organe de calcul (41 ; 141) adapté pour élaborer un signal de couple d'assistance ($S_{AT}$) significatif d'une valeur de couple d'assistance théorique ($C_{AT}$), à partir d'un premier ensemble de paramètres ($P_1$, $P_2$, $P_3$) parmi lesdits paramètres de fonctionnement, **caractérisé en ce que** le dispositif de commande (33 ; 133) comporte un deuxième organe de calcul (42 ; 142) adapté pour élaborer un signal de couple de compensation ($S_c$) significatif d'une valeur de couple de compensation ($C_c$), à partir d'un deuxième ensemble de paramètres ($P_4$, $P_{5,1}$, $P_{5,2}$ ; $P_4$, $P_{5,3}$, $P_{5,4}$) parmi lesdits paramètres de fonctionnement, ledit deuxième ensemble ($P_4$, $P_{5,1}$, $P_{5,2}$ ; $P_4$, $P_{5,3}$, $P_{5,4}$) étant différent du premier ($P_1$, $P_2$, $P_3$) et comprenant au moins un desdits paramètres de freinage ($P_{5,1}$, $P_{5,2}$ ; $P_{5,3}$, $P_{5,4}$), et le signal de commande (S) résulte de la somme du signal de couple d'assistance ($S_{AT}$) et du signal de couple de compensation ($S_c$).

2. Ensemble de direction assistée électrique suivant la revendication 1, **caractérisé en ce que** ledit paramètre de freinage ($P_{5,1}$, $P_{5,2}$) du deuxième ensemble ($P_4$, $P_{5,1}$, $P_{5,2}$) est un paramètre de freinage d'une roue arrière (9B) respective du véhicule.

3. Ensemble de direction assistée électrique suivant la revendication 1, **caractérisé en ce que** ledit paramètre de freinage ($P_{5,3}$, $P_{5,4}$) du deuxième ensemble ($P_4$, $P_{5,3}$, $P_{5,4}$) est un paramètre de freinage d'une roue directrice (9A) respective du véhicule.

4. Ensemble de direction assistée électrique suivant l'une quelconque des revendications 1 à 3, **caractérisé en ce que** ledit paramètre de freinage ($P_{5,1}$, $P_{5,2}$ ; $P_{5,3}$, $P_{5,4}$) est proportionnel à un couple de freinage exercé sur la roue associée (9B ; 9A).

5. Ensemble de direction assistée électrique suivant l'une quelconque des revendications 1 à 4, **caractérisé en ce qu'**il comporte des moyens (23) de mesure du couple exercé par le conducteur sur le volant (2), adaptés pour émettre vers le dispositif de commande (33 ; 133) un signal significatif de la valeur de couple-volant ($P_3$) ainsi mesurée, et le signal de commande (S) est élaboré en fonction de ladite valeur de couple-volant ($P_3$) mesurée.

6. Ensemble de direction assistée électrique suivant l'une quelconque des revendications 1 à 5, **caractérisé en ce qu'**il comporte des moyens (21) de mesure de la vitesse du véhicule et des moyens (22) de mesure de la vitesse de rotation du volant (2), et le premier ensemble de paramètres ($P_1$, $P_2$, $P_3$) comprend la vitesse du véhicule ($P_1$) et la vitesse de rotation du volant ($P_2$) ainsi mesurées.

7. Ensemble de direction assistée électrique suivant les revendications 5 et 6 prises ensemble, **caractérisé en ce que** le premier ensemble ($P_1$, $P_2$, $P_3$) est constitué de la vitesse du véhicule ($P_1$) mesurée, de la vitesse de rotation du volant ($P_2$) mesurée, et du couple-volant ($P_3$) mesuré.

8. Ensemble de direction assistée électrique suivant l'une quelconque des revendications 1 à 7, **caractérisé en ce qu'**il comporte des moyens (24) de mesure de la position angulaire du volant par rapport à la position neutre de braquage nul, et le deuxième ensemble de paramètre ($P_4$, $P_{5,1}$, $P_{5,2}$; $P_4$, $P_{5,3}$, $P_{5,4}$) comprend la position angulaire du volant ($P_4$) ainsi mesurée.

9. Ensemble de direction assistée électrique suivant la revendication 8, **caractérisé en ce que** lesdits moyens (24) de mesure de la position angulaire du volant sont adaptés pour déterminer, par rapport à la position neutre de braquage nul, un sens de braquage du volant.

10. Ensemble de direction assistée électrique suivant les revendications 2 et 9 prises ensemble, **caractérisé en ce que** le deuxième ensemble ($P_4$, $P_{5,1}$, $P_{5,2}$) est constitué de la position angulaire du volant ($P_4$) mesurée et de deux paramètres de freinage ($P_{5,1}$, $P_{5,2}$) correspondant respectivement à chacune de deux roues arrière (9B).

**11.** Ensemble de direction assistée électrique suivant les revendications 3 et 9 prises ensemble, **caractérisé en ce que** le deuxième ensemble ($P_4$, $P_{5,3}$, $P_{5,4}$) est constitué de la position angulaire du volant ($P_4$) mesurée et de deux paramètres de freinage ($P_{5,3}$, $P_{5,4}$) correspondant respectivement à chacune de deux roues directrices (9A).

**12.** Ensemble de direction assistée électrique suivant l'une quelconque des revendications 1 à 11, **caractérisé en ce que** le premier organe de calcul (41 ; 141) est une cartographie.

**13.** Procédé de commande, par un signal de commande de couple, du moteur électrique (30) d'un ensemble de direction assistée électrique d'un véhicule automobile équipé d'un système de contrôle de trajectoire (25 ; 125), ledit système de contrôle de trajectoire étant adapté pour commander le freinage sélectif d'une ou plusieurs roues au moyen de signaux individuels de freinage ($S_1$, $S_2$, $S_3$, $S_4$) significatifs de paramètres de freinage ($P_{5,1}$, $P_{5,2}$, $P_{5,3}$, $P_{5,4}$), ledit ensemble comprenant un arbre de direction rotatif (4) solidaire d'un volant (2) et entraînant une crémaillère (8) d'orientation des roues directrices (9A) du véhicule, un moteur électrique (30) dont l'arbre de sortie (34) engrène avec la crémaillère (8) ou l'arbre de direction (4), et un dispositif de commande (33 ; 133) fournissant audit moteur électrique (30) un signal (S) de commande de couple adapté pour faire varier le couple de sortie ($C_s$) du moteur électrique (30), **caractérisé en ce qu'**on élabore le signal (S) de commande de couple de la façon suivante :

- on détermine une valeur de couple d'assistance théorique ($C_{AT}$) à partir de données pré-enregistrées, en fonction d'un premier ensemble de paramètres de fonctionnement ($P_1$, $P_2$, $P_3$) mesurés ;
- on détermine une valeur de couple de compensation ($C_c$) à partir de données pré-enregistrées, en fonction d'un deuxième ensemble de paramètres de fonctionnement ($P_4$, $P_{5,1}$, $P_{5,2}$ ; $P_4$, $P_{5,3}$, $P_{5,4}$) comprenant au moins un desdits paramètres de freinage ($P_{5,1}$, $P_{5,2}$ ; $P_{5,3}$, $P_{5,4}$) ;
- on effectue la somme desdites valeurs de couple d'assistance théorique ($C_{AT}$) et de couple de compensation ($C_c$) ainsi déterminées, afin d'obtenir une valeur de commande de couple (C) ;
- on élabore le signal (S) de commande de couple correspondant à ladite valeur (C) de commande de couple.

**14.** Procédé de commande suivant la revendication 13, **caractérisé en ce qu'**il comprend en outre les étapes suivantes :

- on mesure la valeur de la vitesse ($P_1$) du véhicule ;
- on mesure la valeur de la vitesse de rotation ($P_2$) du volant;
- on mesure la valeur du couple ($P_3$) appliqué sur le volant (2) par le conducteur,

et **en ce que** le premier ensemble de paramètres de fonctionnement ($P_1$, $P_2$, $P_3$) à partir duquel on détermine la valeur de couple d'assistance théorique ($C_{AT}$) est constitué desdites valeurs ainsi mesurées.

**15.** Procédé de commande suivant la revendication 13 ou 14, **caractérisé en ce qu'**il comporte l'étape suivante :

- on mesure la position angulaire ($P_4$) du volant par rapport à une position neutre de braquage nul,

et **en ce que** le deuxième ensemble de paramètres de fonctionnement à partir duquel on détermine une valeur de couple de compensation ($C_c$) est constituée de ladite valeur de position angulaire ($P_4$) et d'au moins deux paramètres de freinage ($P_{5,1}$, $P_{5,2}$ ; $P_{5,3}$, $P_{5,4}$) correspondant à deux roues du véhicule.

**16.** Procédé de commande suivant la revendication 15, **caractérisé en ce que** lesdits au moins deux paramètres de freinage ($P_{5,1}$, $P_{5,2}$) sont les paramètres de freinage correspondant respectivement à deux roues arrière (9B) du véhicule, respectivement une roue arrière droite et une roue arrière gauche.

**17.** Procédé de commande suivant la revendication 16, **caractérisé en ce qu'**on détermine la valeur de couple de compensation ($C_c$) en fonction d'un seul desdits paramètres de freinage ($P_{5,1}$, $P_{5,2}$), choisi en fonction de la valeur ($P_4$) de position angulaire du volant.

**18.** Procédé de commande suivant la revendication 17, **caractérisé en ce que** :

- si la valeur de position angulaire ($P_4$) du volant correspond à un virage à gauche, le paramètre de freinage choisi est le paramètre de freinage ($P_{5,1}$) correspondant à la roue arrière droite ;
- si la valeur de position angulaire ($P_4$) du volant correspond à un virage à droite, le paramètre de freinage choisi est le paramètre de freinage ($P_{5,2}$) correspondant à la roue arrière gauche.

**19.** Procédé de commande suivant la revendication 18, **caractérisé en ce que** :

- si la valeur du paramètre de freinage choisi ($P_{5,1}$, $P_{5,2}$) est, en valeur absolue, inférieure à une valeur de seuil ($S_F$) prédéterminé, le couple de compensation ($C_c$) est nul ;
- si la valeur du paramètre de freinage choisi ($P_{5,1}$, $P_{5,2}$) est, en valeur absolue, supérieure à ladite valeur de seuil prédéterminée ($S_F$), on réalise les opérations suivantes à partir dudit paramètre de freinage choisi ($P_{5,1}$, $P_{5,2}$):

- on calcule une première variable intermédiaire ($V_1$) en appliquant au paramètre de freinage choisi ($P_{5,1}$, $P_{5,2}$) une première fonction de transfert de la forme $F_1(p) = \dfrac{1}{Ap + B}$ , dans laquelle A et B sont des constantes prédéterminées, la variable de fréquence p correspondant au paramètre de freinage ($P_{5,1}$, $P_{5,2}$), lequel est une fonction du temps (t);
- on calcule la valeur de couple de compensation à partir de cette variable intermédiaire ($V_1$).

**20.** Procédé de commande suivant la revendication 19, **caractérisé en ce qu'**il comporte en outre l'étape suivante :

- on calcule une deuxième variable intermédiaire ($V_2$) en appliquant à la première variable intermédiaire ($V_1$) une deuxième fonction de transfert de la forme

$$F_2(p) = \frac{\alpha.p}{\beta.p^2 + \gamma.p + \delta}\text{,}$$ dans laquelle $\alpha$, $\gamma$, $\beta$, $\delta$ sont des constantes prédéterminées.

**21.** Procédé de commande suivant la revendication 20, **caractérisé en ce qu'**il comporte en outre l'étape suivante :

- on calcule une troisième variable intermédiaire ($V_3$) à partir de ladite deuxième variable intermédiaire ($V_2$) en appliquant à ladite deuxième variable ($V_2$) une fonction de retard temporel dont la constante de temps dépend de la valeur absolue de la première variable intermédiaire ($V_1$), calculée au même instant.

**22.** Procédé de commande suivant la revendication 21, **caractérisé en ce qu'**il comporte en outre l'étape suivante :

- on calcule à chaque instant la valeur de couple de compensation ($C_c$) en appliquant à la troisième variable intermédiaire ($V_3$) un gain dépendant de la valeur absolue de la première variable intermédiaire ($V_1$), calculée au même instant.

**23.** Procédé de commande suivant la revendication 15, **caractérisé en ce que** lesdits au moins deux paramètres de freinage ($P_{5,3}$, $P_{5,4}$) sont les paramètres de freinage correspondant respectivement à deux roues directrices (9A) du véhicule, respectivement une roue avant droite et une roue avant gauche.

**24.** Procédé de commande suivant la revendication 23, **caractérisé en ce qu'**on détermine la valeur de couple de compensation ($C_c$) en fonction de la différence ($P_{5,3}$-$P_{5,4}$) desdits paramètres de freinage ($P_{5,3}$, $P_{5,4}$).

**25.** Procédé de commande suivant la revendication 24, **caractérisé en ce qu'**on détermine la valeur de couple de compensation ($C_c$) de la façon suivante :

- on compare chacun desdits paramètres de freinage ($P_{5,3}$, $P_{5,4}$) à une valeur de seuil respective ($S_{F3}$, $S_{F4}$) ;
- on associe à chacun desdits paramètres de freinage ($P_{5,3}$, $P_{5,4}$) une valeur de test respective ($T_3$, $T_4$), ladite valeur de test étant égale à 1 si la valeur absolue du paramètre de freinage correspondant est supérieure à la valeur de seuil respective, et égale à 0 sinon ;
- on sélectionne l'une desdites valeurs de test ($T_3$, $T_4$) en fonction du paramètre de position angulaire du volant

(P$_4$), la valeur de test sélectionnée étant égale à la valeur de test correspondant à la roue avant gauche (T$_3$) dans le cas d'un virage à gauche, et égale à la valeur de test correspondant à la roue avant droite (T$_4$) dans le cas d'un virage à droite ;
- on calcule la différence (P$_{5,3}$ - P$_{5,4}$) desdits paramètres de freinage (P$_{5,3}$, P$_{5,4}$) ;
- on calcule une première variable intermédiaire (W$_1$) égale au produit de ladite différence (P$_{5,3}$ - P$_{5,4}$) et de ladite valeur de test (T$_3$, T$_4$) sélectionnée ; et
- on calcule le couple de compensation (C$_c$) en fonction de ladite première variable intermédiaire (W$_1$).

**26.** Procédé de commande suivant la revendication 25, **caractérisé en ce qu'**il comporte en outre les étapes suivantes :

- on applique à ladite première variable intermédiaire (W$_1$) une première fonction de transfert de la forme

$$G_1(p) = \frac{1}{Mp + N} \, ,$$

dans laquelle M et N sont des constantes prédéterminées, respectivement une constante de temps et un gain fixe, la variable de fréquence p correspondant à la première variable intermédiaire W$_1$, pour obtenir une deuxième variable intermédiaire (W$_2$) ; et
- on calcule le couple de compensation (C$_c$) en fonction de ladite deuxième variable intermédiaire (W$_2$).

**27.** Procédé de commande suivant la revendication 26, **caractérisé en ce qu'**il comporte en outre les étapes suivantes :

- on calcule à chaque instant une troisième variable intermédiaire (W$_3$) en appliquant à la deuxième variable intermédiaire (W$_2$) un gain fixe ; et
- on calcule le couple de compensation (C$_c$) en fonction de ladite troisième variable intermédiaire (W$_3$).

**28.** Procédé de commande suivant la revendication 27, **caractérisé en ce qu'**il comporte en outre l'étape suivante :

- on calcule à chaque instant le couple de compensation (C$_c$) en multipliant ladite troisième variable intermédiaire (W$_3$) par une valeur de marche/arrêt du compensateur, égale à 0 ou 1, dépendant d'un état du système de contrôle de trajectoire (125) ou du dispositif de commande (133).

**29.** Véhicule automobile comportant un ensemble de direction assistée suivant l'une quelconque des revendications 1 à 12 ou comportant un ensemble de direction assistée fonctionnant selon un procédé suivant l'une quelconque des revendications 13 à 28.


**Claims**

**1.** Electric power assisted steering assembly of a motor vehicle equipped with a trajectory control system (25; 125), the said trajectory control system being adapted for operating the selective braking of one or more wheels by means of individual braking signals (S$_1$, S$_2$, S$_3$ and S$_4$) signifying braking parameters (P$_{5.1}$, P$_{5.2}$, P$_{5.3}$ and P$_{5.4}$), the said assembly comprising a rotary steering shaft (4), secured to a steering wheel (2) and co-operating with a rack (8) for orientation of the vehicle's steering road wheels (9A), an electric motor (30), the output shaft (34) of which meshes with the rack (8) or the steering shaft (4) and a control device (33; 133) supplying to the said electric motor (30) a control signal (S) adapted to make the output torque (C$_s$) of the electric motor (30) vary according to operation parameters (P$_1$, P$_2$, P$_3$, P$_4$, P$_{5.1}$ and P$_{5.2}$) of the steering shaft (4) and more generally of the vehicle, the said control device (33; 133) comprising a first calculation unit (41; 141) adapted for working out an assistance torque signal (S$_{AT}$) signifying a theoretical assistance torque value (C$_{AT}$), from a first set of parameters (P$_1$, P$_2$ and P$_3$) among the said operation parameters, **characterized in that** the control device (33; 133) comprises a second calculation unit (42; 142) adapted for working out a compensation torque signal (S$_c$) signifying a compensation torque value (C$_c$), from a second set of parameters (P$_4$, P$_{5.1}$ and P$_{5.2}$; P$_4$, P$_{5.3}$ and P$_{5.4}$) among the said operation parameters, the said second set (P$_4$, P$_{5.1}$ and P$_{5.2}$; P$_4$, P$_{5.3}$ and P$_{5.4}$) being different from the first one (P$_1$, P$_2$, and P$_3$) and comprising at least one of the said braking parameters (P$_{5.1}$ and P$_{5.2}$; P$_{5.3}$ and P$_{5.4}$) and the control signal (S) results from the sum of the assistance torque signal (S$_{AT}$) and the compensation torque signal (S$_c$).

**2.** Electric power assisted steering assembly according to Claim 1, **characterized in that** the said braking parameter (P$_{5.1}$ and P$_{5.2}$) of the second set (P$_4$, P$_{5.1}$ and P$_{5.2}$) is a braking parameter of a respective rear wheel (9B) of the vehicle.

3.  Electric power assisted steering assembly according to Claim 1, **characterized in that** the said braking parameter ($P_{5.3}$ and $P_{5.4}$) of the second set ($P_4$, $P_{5.3}$ and $P_{5.4}$) is a braking parameter of a respective steering road wheel (9A) of the vehicle.

4.  Electric power assisted steering assembly according to any one of Claims 1 to 3, **characterized in that** the said braking parameter ($P_{5.1}$ and $P_{5.2}$; $P_{5.3}$ and $P_{5.4}$) is proportional to braking torque exerted on the associated wheel (9B; 9A).

5.  Electric power assisted steering assembly according to any one of Claims 1 to 4, **characterized in that** it comprises means (23) of measuring the torque exerted by the driver on the steering wheel (2), adapted to emit to the control device (33; 133) a signal signifying the steering wheel torque value ($P_3$) thus measured and the control signal (S) is worked out according to the said steering wheel torque value ($P_3$) measured.

6.  Electric power assisted steering assembly according to any one of Claims 1 to 5, **characterized in that** it comprises means (21) of measuring the vehicle speed and means (22) of measuring the speed of steering wheel (2) rotation and the first set of parameters ($P_1$, $P_2$, and $P_3$) includes the vehicle speed ($P_1$) and the speed of steering wheel rotation ($P_2$) thus measured.

7.  Electric power assisted steering assembly according to Claims 5 and 6 taken together, **characterized in that** the first set ($P_1$, $P_2$, and $P_3$) is made up of the vehicle speed ($P_1$) measured, the speed of steering wheel rotation ($P_2$) measured and the steering wheel torque ($P_3$) measured.

8.  Electric power assisted steering assembly according to any one of Claims 1 to 7, **characterized in that** it comprises means (24) of measuring the angular position of the steering wheel relative to the neutral position of no turning and the second set of parameters ($P_4$, $P_{5.1}$ and $P_{5.2}$; $P_4$, $P_{5.3}$ and $P_{5.4}$) includes the angular position of the steering wheel ($P_4$) thus measured.

9.  Electric power assisted steering assembly according to Claim 8, **characterized in that** the said means (24) of measuring the angular position of the steering wheel are adapted for determining, relative to the neutral position of no turning, a turning direction of the steering wheel.

10. Electric power assisted steering assembly according to Claims 2 and 9 taken together, **characterized in that** the second set ($P_4$, $P_{5.1}$ and $P_{5.2}$) is made up of the angular position of the steering wheel ($P_4$) measured and of two braking parameters ($P_{5.1}$ and $P_{5.2}$) corresponding to each of the two rear wheels (9B) respectively.

11. Electric power assisted steering assembly according to Claims 3 and 9 taken together, **characterized in that** the second set ($P_4$, $P_{5.3}$ and $P_{5.4}$) is made up of the angular position of the steering wheel ($P_4$) measured and of two braking parameters ($P_{5.3}$ and $P_{5.4}$) corresponding to each of the two steering road wheels (9A) respectively.

12. Electric power assisted steering assembly according to any one of Claims 1 to 11, **characterized in that** the first calculation unit (41; 141) is a mapping unit.

13. Process of control, by a torque control signal, of the electric motor (30) of an electric power assisted steering assembly of a motor vehicle equipped with a trajectory control system (25; 125), the said trajectory control system being adapted for operating the selective braking of one or more wheels by means of individual braking signals ($S_1$, $S_2$, $S_3$ and $S_4$) signifying braking parameters ($P_{5.1}$, $P_{5.2}$, $P_{5.3}$ and $P_{5.4}$), the said assembly comprising a rotary steering shaft (4), secured to a steering wheel (2) and driving a rack (8) for orientation of the vehicle's steering road wheels (9A), an electric motor (30), the output shaft (34) of which meshes with the rack (8) or the steering shaft (4) and a control device (33; 133) supplying to the said electric motor (30) a torque control signal (S) adapted to make the output torque ($C_s$) of the electric motor (30) vary, **characterized in that** the torque control signal (S) is worked out as follows:

    - a theoretical power assistance torque value ($C_{AT}$) is determined from pre-recorded data, according to a first set of operation parameters ($P_1$, $P_2$ and $P_3$) measured,
    - a compensation torque value ($C_C$) is determined from pre-recorded data, according to a second set of operation parameters ($P_4$, $P_{5.1}$ and $P_{5.2}$; $P_4$, $P_{5.3}$ and $P_{5.4}$) comprising at least one of the said braking parameters ($P_{5.1}$ and $P_{5.2}$; $P_{5.3}$ and $P_{5.4}$),
    - the sum of the said values of theoretical power assistance torque ($C_{AT}$) and compensation torque ($C_c$) thus determined is found, in order to obtain a torque control value (C) and
- the torque control signal (S) corresponding to the said torque control value (C) is worked out.

14. Control process according to Claim 13, **characterized in that** it also comprises the following stages:

- the vehicle speed value ($P_1$) is measured,
- the steering wheel rotation speed value ($P_2$) is measured and
- the value of the torque ($P_3$) applied to the steering wheel (2) by the driver is measured

and **in that** the first set of operation parameters ($P_1$, $P_2$ and $P_3$), from which the theoretical power assistance torque value ($C_{AT}$) is determined, is made up of the said values thus measured.

15. Control process according to Claim 13 or 14, **characterized in that** it comprises the following stage:

- the angular position ($P_4$) of the steering wheel relative to a neutral position of no turning is measured

and **in that** the second set of operation parameters, from which a compensation torque value ($C_c$) is determined, is made up of the said angular position value ($P_4$) and of at least two braking parameters ($P_{5.1}$ and $P_{5.2}$; $P_{5.3}$ and $P_{5.4}$) corresponding to two of the vehicle's wheels.

16. Control process according to Claim 15, **characterized in that** the said at least two braking parameters ($P_{5.1}$ and $P_{5.2}$) are the braking parameters corresponding respectively to two rear wheels (9B) of the vehicle, a right rear wheel and a left rear wheel respectively.

17. Control process according to Claim 16, **characterized in that** the compensation torque value ($C_c$) is determined according to just one of the said braking parameters ($P_{5.1}$ or $P_{5.2}$), chosen according to the steering wheel angular position value ($P_4$).

18. Control process according to Claim 17,
**characterized in that**:

- if the steering wheel angular position value ($P_4$) corresponds to turning left, the braking parameter chosen is the braking parameter ($P_{5.1}$) corresponding to the right rear wheel,
- if the steering wheel angular position value ($P_4$) corresponds to turning right, the braking parameter chosen is the braking parameter ($P_{5.2}$) corresponding to the left rear wheel.

19. Control process according to Claim 18,
**characterized in that**:

- if the value of the braking parameter chosen ($P_{5.1}$ or $P_{5.2}$) is, in absolute value, lower than a predetermined threshold value ($S_F$), the compensation torque ($C_c$) is nil,
- if the value of the braking parameter chosen ($P_{5.1}$ or $P_{5.2}$) is, in absolute value, higher than the said predetermined threshold value ($S_F$), the following operations are carried out from the said braking parameter chosen ($P_{5.1}$ or $P_{5.2}$) :

- a first intermediate variable ($V_1$) is calculated with the application, to the braking parameter chosen ($P_{5.1}$ or $P_{5.2}$), of a first transfer function of the form

$$F_1(p) = \frac{1}{Ap + B},$$

where A and B are predetermined constants, the frequency variable p corresponding to the braking parameter ($P_{5.1}$ or $P_{5.2}$), which is a function of time $\underline{t}$ and
- the compensation torque value is calculated from this intermediate variable ($V_1$) .

**20.** Control process according to Claim 19, **characterized in that** it also comprises the following stage:

- a second intermediate variable ($V_2$) is calculated with the application, to the first intermediate variable ($V_1$), of a second transfer function of the form

$$F_2(p) = \frac{\alpha \cdot p}{\beta \cdot p^2 + \gamma \cdot p + \delta} ,$$

where $\alpha$, $\gamma$, $\beta$ and $\delta$ are predetermined constants.

**21.** Control process according to Claim 20, **characterized in that** it also comprises the following stage:

- a third intermediate variable ($V_3$) is calculated from the said second intermediate variable ($V_2$) with the application, to the said second variable ($V_2$), of a time delay function, the time constant of which depends on the absolute value of the first intermediate variable ($V_1$), calculated at the same instant.

**22.** Control process according to Claim 21, **characterized in that** it also comprises the following stage:

- at each instant, the compensation torque value ($C_c$) is calculated with the application, to the third intermediate variable ($V_3$), of a gain depending on the absolute value of the first intermediate variable ($V_1$), calculated at the same instant.

**23.** Control process according to Claim 15, **characterized in that** the said at least two braking parameters ($P_{5.3}$ and $P_{5.4}$) are the braking parameters corresponding respectively to two steering road wheels (9A) of the vehicle, a right front wheel and a left front wheel respectively.

**24.** Control process according to Claim 23, **characterized in that** the compensation torque value ($C_c$) is determined according to the difference ($P_{5.3} - P_{5.4}$) of the said braking parameters ($P_{5.3}$ and $P_{5.4}$).

**25.** Control process according to Claim 24, **characterized in that** the compensation torque value ($C_c$) is determined as follows:

- each of the said braking parameters ($P_{5.3}$ and $P_{5.4}$) is compared with a respective threshold value ($S_{F3}$ and $S_{F4}$),
- each of the said braking parameters ($P_{5.3}$ and $P_{5.4}$) has, associated with it, a respective test value ($T_3$ and $T_4$), the said test value being equal to 1 if the absolute value of the corresponding braking parameter is greater than the respective threshold value and equal to 0 if not,
- one of the said test values ($T_3$ or $T_4$) is selected according to the steering wheel angular position parameter ($P_4$), the test value selected being equal to the test value corresponding to the left front wheel ($T_3$) in the case of turning left and equal to the test value corresponding to the right front wheel ($T_4$) in the case of turning right,
- the difference ($P_{5.3} - P_{5.4}$) of the said braking parameters ($P_{5.3}$ and $P_{5.4}$) is calculated,
- a first intermediate variable ($W_1$) equal to the product of the said difference ($P_{5.3} - P_{5.4}$) and of the said test value ($T_3$ or $T_4$) selected is calculated and
- the compensation torque ($C_c$) is calculated according to the said first intermediate variable ($W_1$).

**26.** Control process according to Claim 25, **characterized in that** it also comprises the following stages:

- to the said first intermediate variable ($W_1$), is applied a first transfer function of the form

$$G_1(p) = \frac{1}{Mp + N},$$

where M and N are predetermined constants, a time constant and a fixed gain respectively, the frequency variable p corresponding to the first intermediate variable $W_1$, to obtain a second intermediate variable ($W_2$) and

- the compensation torque ($C_c$) is calculated according to the said second intermediate variable ($W_2$).

27. Control process according to Claim 26, **characterized in that** it also comprises the following stages:

- at each instant, a third intermediate variable ($W_3$) is calculated with the application, to the second intermediate variable ($W_2$), of a fixed gain and
- the compensation torque ($C_c$) is calculated according to the said third intermediate variable ($W_3$).

28. Control process according to Claim 27, **characterized in that** it also comprises the following stage:

- at each instant, the compensation torque ($C_c$) is calculated with the multiplication of the said third intermediate variable ($W_3$) by a compensator go/stop value, equal to 0 or 1, depending on a state of the trajectory control system (125) or of the control device (133).

29. Motor vehicle comprising a power assisted steering assembly according to any one of Claims 1 to 12 or comprising a power assisted steering assembly operating according to a process according to any one of Claims 13 to 28.

**Patentansprüche**

1. Elektrische Servolenkanordnung eines mit einem elektronischen Stabilitätsprogramm (25; 125) versehenen Kraftfahrzeugs, wobei das elektronische Stabilitätsprogramm so beschaffen ist, dass es das wahlweise Bremsen eines oder mehrerer Räder mittels einzelner Bremssignale ($S_1$, $S_2$, $S_3$, $S_4$), die Bremsparameter ($P_{5,1}$, $P_{5,2}$, $P_{5,3}$, $P_{5,4}$) angeben, steuert, wobei die Anordnung eine mit einem Lenkrad (2) verbundene drehbare Lenkwelle (4), die mit einer Zahnstange (8) zum Einschlagen der gelenkten Räder (9A) des Fahrzeugs zusammenwirkt, einen Elektromotor (30), dessen Abtriebswelle (34) mit der Zahnstange (9) oder mit der Lenkwelle (4) in Eingriff ist, und eine Steuervorrichtung (33; 133), die an den Elektromotor (30) ein Steuersignal (S) liefert, das das Ausgangsdrehmoment ($C_S$) des Elektromotors (30) in Abhängigkeit von Betriebsparametern ($P_1$, $P_2$, $P_3$, $P_4$, $P_{5,1}$, $P_{5,2}$) der Lenkwelle (4) und allgemeiner des Fahrzeugs verändern kann, umfasst, wobei die Steuervorrichtung (33; 133) ein erstes Rechenorgan (41; 141), das so beschaffen ist, dass es anhand einer ersten Gesamtheit von Parametern ($P_1$, $P_2$, $P_3$) unter den Betriebsparametern ein Hilfsdrehmoment-Signal ($S_{AT}$), das einen theoretischen Hilfsdrehmoment-Wert ($C_{AT}$) angibt, erzeugen kann, **dadurch gekennzeichnet, dass** die Steuervorrichtung (33; 133) ein zweites Rechenorgan (42; 142) umfasst, das anhand einer zweiten Gesamtheit von Parametern ($P_4$, $P_{5,1}$, $P_{5,2}$; $P_4$, $P_{5,3}$, $P_{5,4}$) unter den Betriebsparametern ein Kompensationsdrehmoment-Signal ($S_C$), das einen Kompensationsdrehmoment-Wert ($C_c$) angibt, erzeugen kann, wobei die zweite Gesamtheit ($P_4$, $P_{5,1}$, $P_{5,2}$; $P_4$, $P_{5,3}$, $P_{5,4}$) von der ersten Gesamtheit ($P_1$, $P_2$, $P_3$) verschieden ist und wenigstens einen der Bremsparameter ($P_{5,1}$, $P_{5,2}$; $P_{5,3}$, $P_{5,4}$) enthält, und das Steuersignal (S) sich aus der Summe des Hilfsdrehmoment-Signals ($S_{AT}$) und des Kompensationsdrehmoment-Signals ($S_C$) ergibt.

2. Elektrische Servolenkanordnung nach Anspruch 1, **dadurch gekennzeichnet, dass** der Bremsparameter ($P_{5,1}$, $P_{5,2}$) der zweiten Gesamtheit ($P_4$, $P_{5,1}$, $P_{5,2}$) ein Bremsparameter eines jeweiligen Hinterrades (9B) des Fahrzeugs ist.

3. Elektrische Servolenkanordnung nach Anspruch 1, **dadurch gekennzeichnet, dass** der Bremsparameter ($P_{5,3}$, $P_{5,4}$) der zweiten Gesamtheit ($P_4$, $P_{5,3}$, $P_{5,4}$) ein Bremsparameter eines jeweiligen gelenkten Rades (9A) des Fahrzeugs ist.

4. Elektrische Servolenkanordnung nach einem der Ansprüche 1 bis 3, **dadurch gekennzeichnet, dass** der Bremsparameter ($P_{5,1}$, $P_{5,2}$; $P_{5,3}$, $P_{5,4}$) zu einem Bremsdrehmoment, das auf das zugeordnete Rad (9B; 9A) ausgeübt wird, proportional ist.

5. Elektrische Servolenkanordnung nach einem der Ansprüche 1 bis 4, **dadurch gekennzeichnet, dass** sie Mittel (23) zum Messen des durch den Fahrer auf das Lenkrad (2) ausgeübten Drehmoments enthält, die so beschaffen sind, dass sie an die Steuervorrichtung (33; 133) ein Signal, das den auf diese Weise gemessenen Lenkraddrehmoment-Wert ($P_3$) angibt, senden, und das Steuersignal (S) als Funktion des gemessenen Lenkraddrehmoment-Wertes ($P_3$) erzeugt wird.

6. Elektrische Servolenkanordnung nach einem der Ansprüche 1 bis 5, **dadurch gekennzeichnet, dass** sie Mittel (21) zum Messen der Geschwindigkeit des Fahrzeugs und Mittel (22) zum Messen der Drehgeschwindigkeit des Lenkrades (2) umfasst und die erste Gesamtheit von Parametern ($P_1$, $P_2$, $P_3$) die Geschwindigkeit des Fahrzeugs ($P_1$) und die Drehgeschwindigkeit des Lenkrades ($P_2$), die auf diese Weise gemessen werden, enthält.

7. Elektrische Servolenkanordnung nach den Ansprüchen 5 und 6 zusammengenommen, **dadurch gekennzeichnet, dass** die erste Gesamtheit ($P_1$, $P_2$, $P_3$) aus der gemessenen Fahrgeschwindigkeit ($P_1$), der gemessenen Drehgeschwindigkeit ($P_2$) des Lenkrades und dem gemessenen Lenkraddrehmoment ($P_3$) gebildet ist.

8. Elektrische Servolenkanordnung nach einem der Ansprüche 1 bis 7, **dadurch gekennzeichnet, dass** sie Mittel (24) zum Messen der Winkelstellung des Lenkrades in Bezug auf die Neutralstellung mit Lenkausschlag null umfasst und die zweite Gesamtheit von Parametern ($P_4$, $P_{5,1}$, $P_{5,2}$; $P_4$, $P_{5,3}$, $P_{5,4}$) die auf diese Weise gemessene Winkelstellung des Lenkrades ($P_4$) enthält.

9. Elektrische Servolenkanordnung nach Anspruch 8, **dadurch gekennzeichnet, dass** die Mittel (24) zum Messen der Winkelstellung des Lenkrades so beschaffen sind, dass sie eine Einschlagrichtung des Lenkrades in Bezug auf die Neutralstellung mit Einschlag null bestimmen.

10. Elektrische Servolenkanordnung nach den Ansprüchen 2 und 9 zusammengenommen, **dadurch gekennzeichnet, dass** die zweite Gesamtheit ($P_4$, $P_{5,1}$, $P_{5,2}$) aus der gemessenen Winkelstellung ($P_4$) des Lenkrades und aus zwei Bremsparametern ($P_{5,1}$, $P_{5,2}$), die jeweils einem der beiden Hinterräder (9B) entsprechen, gebildet ist.

11. Elektrische Servolenkanordnung nach den Ansprüchen 3 und 9 zusammengenommen, **dadurch gekennzeichnet, dass** die zweite Gesamtheit ($P_4$, $P_{5,3}$, $P_{5,4}$) aus der gemessenen Winkelstellung ($P_4$) des Lenkrades und aus zwei Bremsparametern ($P_{5,3}$, $P_{5,4}$), die jeweils einem der beiden gelenkten Räder (9A) entsprechen, gebildet ist.

12. Elektrische Servolenkanordnung nach einem der Ansprüche 1 bis 11, **dadurch gekennzeichnet, dass** das erste Rechenorgan (41; 141) ein Kennfeld ist.

13. Verfahren zum Steuern des Elektromotors (30) einer elektrischen Servolenkanordnung eines mit einem elektronischen Stabilitätsprogramm (25; 125) versehenen Kraftfahrzeugs durch ein Drehmomentsteuersignal, wobei das elektronische Stabilitätsprogramm so beschaffen ist, dass es das wahlweise Bremsen eines oder mehrerer Räder mittels einzelner Bremssignale ($S_1$, $S_2$, $S_3$, $S_4$), die Bremsparameter ($P_{5,1}$, $P_{5,2}$, $P_{5,3}$, $P_{5,4}$) angeben, steuert, wobei die Anordnung eine mit einem Lenkrad (2) fest verbundene drehbare Lenkwelle (4), die eine Zahnstange (8) zum Einschlagen der gelenkten Räder (9A) des Fahrzeugs antreibt, einen Elektromotor (30), dessen Abtriebswelle (34) mit der Zahnstange (8) oder mit der Lenkwelle (4) in Eingriff ist, und eine Steuervorrichtung (33; 133), die an den Elektromotor (30) ein Drehmomentsteuersignal (S) liefert, das das Ausgangsdrehmoment ($C_S$) des Elektromotors (30) verändern kann, umfasst, **dadurch gekennzeichnet, dass** das Drehmomentsteuersignal (S) auf die folgende Weise erzeugt wird:

- Bestimmen eines theoretischen Hilfsdrehmomentwertes ($C_{AT}$) anhand von im Voraus aufgezeichneten Daten in Abhängigkeit von einer ersten Gesamtheit von gemessenen Betriebsparametern ($P_1$, $P_2$, $P_3$);
- Bestimmen eines Kompensationsdrehmoment-Wertes ($C_C$) anhand von im Voraus aufgezeichneten Daten in Abhängigkeit von einer zweiten Gesamtheit von Betriebsparametern ($P_4$, $P_{5,1}$, $P_{5,2}$; $P_4$, $P_{5,3}$, $P_{5,4}$), die wenigstens einen der Bremsparameter ($P_{5,1}$, $P_{5,2}$; $P_{5,3}$, $P_{5,4}$) enthält;
- Bilden der Summe der Werte des theoretischen Hilfsdrehmoments ($C_{AT}$) und des Kompensationsdrehmoments ($C_C$), die auf diese Weise bestimmt worden sind, um einen Drehmomentsteuerwert (C) zu erhalten;
- Erzeugen des Drehmomentsteuersignals (S), das dem Drehmomentsteuerwert (C) entspricht.

14. Steuerverfahren nach Anspruch 13, **dadurch gekennzeichnet, dass** es außerdem die folgenden Schritte umfasst:

- Messen des Wertes der Geschwindigkeit ($P_1$) des Fahrzeugs;
- Messen des Wertes der Drehgeschwindigkeit ($P_2$) des Lenkrades;
- Messen des Wertes ($P_3$) des Drehmoments, das durch den Fahrer auf das Lenkrad (2) ausgeübt wird,

und dass die erste Gesamtheit von Betriebsparametern ($P_1$, $P_2$, $P_3$), anhand derer der Wert des theoretischen Hilfsdrehmoments ($C_{AT}$) bestimmt wird, aus den auf diese Weise gemessenen Werten gebildet ist.

**15.** Steuerverfahren nach Anspruch 13 oder 14, **dadurch gekennzeichnet, dass** es den folgenden Schritt umfasst:

- Messen der Winkelstellung ($P_4$) des Lenkrades in Bezug auf eine Neutralstellung mit Einschlag null,

und dass die zweite Gesamtheit von Betriebsparametern, anhand derer ein Wert des Kompensationsdrehmoments ($C_c$) bestimmt wird, aus dem Winkelstellungswert ($P_4$) und aus wenigstens zwei Bremsparametern ($P_{5,1}$, $P_{5,2}$; $P_{5,3}$, $P_{5,4}$), die zwei Rädern des Fahrzeugs entsprechen, gebildet wird.

**16.** Steuerverfahren nach Anspruch 15, **dadurch gekennzeichnet, dass** die wenigstens zwei Bremsparameter ($P_{5,1}$, $P_{5,2}$) Bremsparameter sind, die jeweils einem der Hinterräder (9B) des Fahrzeugs, d. h. einem rechten Hinterrad bzw. einem linken Hinterrad entsprechen.

**17.** Steuerverfahren nach Anspruch 16, **dadurch gekennzeichnet, dass** der Wert des Kompensationsdrehmoments ($C_c$) in Abhängigkeit von einem einzigen der Bremsparameter ($P_{5,1}$, $P_{5,2}$), der in Abhängigkeit vom Wert ($P_4$) der Winkelstellung des Lenkrades gewählt wird, bestimmt wird.

**18.** Steuerverfahren nach Anspruch 17, **dadurch gekennzeichnet, dass**:

- dann, wenn der Wert ($P_4$) der Winkelstellung des Lenkrades einer Linkskurve entspricht, der gewählte Bremsparameter der Bremsparameter ($P_{5,1}$) ist, der dem rechten Hinterrad entspricht;
- dann, wenn der Wert ($P_4$) der Winkelstellung des Lenkrades einer Rechtskurve entspricht, der gewählte Bremsparameter der Bremsparameter ($P_{5,2}$) ist, der dem linken Hinterrad entspricht.

**19.** Steuerverfahren nach Anspruch 18, **dadurch gekennzeichnet, dass**:

- dann, wenn der Wert des gewählten Bremsparameters ($P_{5,1}$, $P_{5,2}$) dem Absolutwert nach kleiner als ein vorgegebener Schwellenwert ($S_F$) ist, das Kompensationsdrehmoment ($C_C$) null ist;
- dann, wenn der Wert des gewählten Bremsparameters ($P_{5,1}$, $P_{5,2}$) dem Absolutwert nach größer als der vorgegebene Schwellenwert ($S_F$) ist, die folgenden Operationen anhand des gewählten Bremsparameters ($P_{5,1}$, $P_{5,2}$) ausgeführt werden:

- Berechnen einer ersten Zwischenvariable ($V_1$) durch Anwenden einer ersten Übertragungsfunktion der Form

$$F_1(p) = \frac{1}{Ap + B}$$

auf den gewählten Bremsparameter ($P_{5,1}$, $P_{5,2}$), wobei in der Übertragungsfunktion A und B vorgegebene Konstanten sind und die Variable der Frequenz p dem Bremsparameter ($P_{5,1}$, $P_{5,2}$) entspricht, der eine Funktion der Zeit (t) ist;
- Berechnen des Kompensationsdrehmoment-Wertes anhand dieser Zwischenvariable ($V_1$).

**20.** Steuerverfahren nach Anspruch 19, **dadurch gekennzeichnet, dass** es außerdem den folgenden Schritt umfasst:

Berechnen einer zweiten Zwischenvariable ($V_2$) durch Anwenden einer zweiten Übertragungsfunktion der Form

$$F_2(p) = \frac{\alpha \cdot p}{\beta \cdot p^2 + \gamma \cdot p + \delta}$$

auf die erste Zwischenvariable ($V_1$), wobei in der Übertragungsfunktion $\alpha$, $\gamma$, $\beta$, $\delta$ vorgegebene Konstanten sind.

**21.** Steuerverfahren nach Anspruch 20, **dadurch gekennzeichnet, dass** es außerdem den folgenden Schritt umfasst:

- Berechnen einer dritten Zwischenvariable ($V_3$) anhand der zweiten Zwischenvariable ($V_2$) durch Anwenden einer Zeitverzögerungsfunktion auf die zweite Variable ($V_2$), wobei die Zeitkonstante der Zeitverzögerungsfunktion von dem Absolutwert der ersten Zwischenvariable ($V_1$), die zum selben Zeitpunkt berechnet wird, abhängt.

**22.** Steuerverfahren nach Anspruch 21, **dadurch gekennzeichnet, dass** es außerdem den folgenden Schritt umfasst:

- Berechnen des Kompensationsdrehmoment-Wertes ($C_C$) zu jedem Zeitpunkt durch Anwenden einer von dem Absolutwert der zum selben Zeitpunkt berechneten ersten Zwischenvariable ($V_1$) abhängenden Verstärkung auf die dritte Zwischenvariable ($V_3$).

**23.** Steuerverfahren nach Anspruch 15, **dadurch gekennzeichnet, dass** die wenigstens zwei Bremsparameter ($P_{5,3}$, $P_{5,4}$) die Bremsparameter sind, die den zwei gelenkten Rädern (9A) des Fahrzeugs, d. h. einem rechten Vorderrad bzw. einem linken Vorderrad entsprechen.

**24.** Steuerverfahren nach Anspruch 23, **dadurch gekennzeichnet, dass** der Kompensationsdrehmoment-Wert ($C_C$) in Abhängigkeit von der Differenz ($P_{5,3}$ - $P_{5,4}$) der Bremsparameter ($P_{5,3}$, $P_{5,4}$) bestimmt wird.

**25.** Steuerverfahren nach Anspruch 24, **dadurch gekennzeichnet, dass** der Kompensationsdrehmoment-Wert ($C_C$) auf die folgende Weise bestimmt wird:

- Vergleichen jedes der Bremsparameter ($P_{5,3}$, $P_{5,4}$) mit einem jeweiligen Schwellenwert ($S_{F3}$, $S_{F4}$);
- Zuordnen eines jeweiligen Testwertes ($T_3$, $T_4$) zu jedem der Bremsparameter ($P_{5,3}$, $P_{5,4}$), wobei der Testwert gleich 1 ist, wenn der Absolutwert des entsprechenden Bremsparameters größer als der jeweilige Schwellenwert ist, und andernfalls 0 ist;
- Auswählen eines der Testwerte ($T_3$, $T_4$) in Abhängigkeit vom Parameter der Winkelstellung ($P_4$) des Lenkrades, wobei der ausgewählte Testwert gleich dem Testwert ist, der im Fall einer Linkskurve dem linken Vorderrad ($T_3$) entspricht, und gleich dem Testwert ist, der im Fall einer Rechtskurve dem rechten Vorderrad ($T_4$) entspricht;
- Berechnen der Differenz ($P_{5,3}$ - $P_{5,4}$) der Bremsparameter ($P_{5,3}$, $P_{5,4}$);
- Berechnen einer ersten Zwischenvariable ($W_1$), die gleich dem Produkt aus der Differenz ($P_{5,3}$ - $P_{5,4}$) und dem ausgewählten Testwert ($T_3$, $T_4$) ist; und
- Berechnen des Komponsationsdrehmoments ($C_C$) in Abhängigkeit von der ersten Zwischenvariable ($W_1$).

**26.** Steuerverfahren nach Anspruch 25, **dadurch gekennzeichnet, dass** es außerdem die folgenden Schritte umfasst:

- Anwenden einer ersten Übertragungsfunktion der Form

$$G_1(p) = \frac{1}{Mp + N}$$

auf die erste Zwischenvariable ($W_1$), wobei in der Übertragungsfunktion $M$ und $N$ vorgegebene Konstanten, d. h. eine Zeitkonstante bzw. eine feste Verstärkung sind, wobei die Variable der Frequenz p der ersten Zwischenvariable ($W_1$) entspricht, um eine zweite Zwischenvariable ($W_2$) zu erhalten; und
- Berechnen des Kompensationsdrehmoments ($C_C$) in Abhängigkeit von der zweiten Zwischenvariable ($W_2$).

**27.** Steuerverfahren nach Anspruch 26, **dadurch gekennzeichnet, dass** es außerdem die folgenden Schritte umfasst:

- Berechnen einer dritten Zwischenvariable ($W_3$) zu jedem Zeitpunkt durch Anwenden einer festen Verstärkung auf die zweite Zwischenvariable ($W_2$); und

- Berechnen des Kompensationsdrehmoments ($C_C$) in Abhängigkeit von der dritten Zwischenvariable ($W_3$).

**28.** Steuerverfahren nach Anspruch 27, **dadurch gekennzeichnet, dass** es außerdem den folgenden Schritt umfasst:

- Berechnen des Kompensationsdrehmoments ($C_c$) zu jedem Zeitpunkt durch Multiplizieren der dritten Zwischenvariable ($W_3$) mit einem Lauf/Anhalte-Wert des Kompensierers, der gleich 0 oder 1 ist, in Abhängigkeit von einem Zustand des elektronischen Stabilitätsprogramms (25) oder der Steuervorrichtung (133).

**29.** Kraftfahrzeug, das eine Servolenkanordnung nach einem der Ansprüche 1 bis 12 oder eine Servolenkanordnung, die gemäß einem Verfahren nach einem der Ansprüche 13 bis 28 arbeitet, enthält.

FIG.1

FIG.2

$$\text{FIG.3}$$

FIG.4

**EP 1 234 747 B1**

## RÉFÉRENCES CITÉES DANS LA DESCRIPTION

**Documents brevets cités dans la description**

- EP 1031493 A